(19)

Europäisches Patentamt
European Patent Office
Office européen des brevets

(11) **EP 2 703 811 A1**

(12) **EUROPEAN PATENT APPLICATION**

(43) Date of publication:
**05.03.2014 Bulletin 2014/10**

(51) Int Cl.:
**G01N 30/86** *(2006.01)*        *G01N 30/32* *(2006.01)*

(21) Application number: **13004289.8**

(22) Date of filing: **30.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.08.2012 JP 2012192625**

(71) Applicant: **Horiba Stec, Co., Ltd.
Kyoto-shi, Kyoto 601-8116 (JP)**

(72) Inventor: **Sasaki, Tomohiro
Kyoto-shi, Kyoto, 601-8116 (JP)**

(74) Representative: **Müller-Boré & Partner
Patentanwälte PartG mbB
Grafinger Straße 2
81671 München (DE)**

(54) **Gas chromatograph data processing device, data processing program, and data processing method**

(57)     Provided in order to permit accurate calculation of an adjusted retention time of alkane at a arbitrary temperature and thus permit more improvement in accuracy in calculation of a retention index at the arbitrary temperature based on a known retention index is a column inlet pressure setting part 23 which receives at least a second sample temperature and outputs a second column inlet pressure such that a void time as a retention time of a non-retained substance as a substance not retained in a column at the second sample temperature becomes substantially equal to a void time at a first sample temperature.

FIG. 2

$t'_{r_n}(X)$   RT actually measured at isothermal analysis temperature Tx for unknown sample
$I_{r_n}(X)$   RI actually measured at isothermal analysis temperature Tx for unknown sample
$T_x$   Isothermal analysis temperature when RI for unknown sample is actually measured
$G_x$   Identifier of registered substance
$P_2$   Identifier of standard substance
$T_1(G_n),\ T_2(G_n)$   First temperature and second temperature at which RI of registered substance is actually measured
$I_1(G_n),\ I_2(G_n)$   RIs at first temperature and second temperature of registered substance
$t'_{r_1}(G_n),\ t'_{r_2}(G_n)$   Adjusted RTs at first temperature and second temperature of registered substance
$f(P_2, T)$   Adjusted RT calculation function of standard substance
$t'_{r_Z}(P_2),\ t'_{r_{Z+1}}(P_2)$   Adjusted RTs at first temperature of alkaline of standard substance, carbon number Z, and Z+1
$t'_{r_Z}(P_2),\ t'_{r_{Z+1}}(P_2)$   Adjusted RTs at second temperature of alkaline of standard substance, carbon number Z, and Z+1
$t'_{r_Z}(P_n),\ t'_{r_{Z+1}}(P_n)$   Adjusted RTs at isothermal analysis temperature Tx of alkaline of standard substance, carbon number Z, and Z+1
$t'_{r_n}(G_x)$   Adjusted RT at isothermal analysis temperature Tx of registered substance
$I_{r_n}(G_x)$   RI at isothermal analysis temperature Tx of registered substance

EP 2 703 811 A1

**Description**

Technical Field

The present invention relates to a gas chromatograph data processing device that converts values actually measured by gas chromatograph analysis and adapts these values to be suitable for comparison, etc., a recording medium recording a data processing program, and a data processing method.

Background Art

Listed as a value measured for a sample to be determined in gas chromatograph analysis is, for example, an adjusted retention time. This adjusted retention time is a value obtained by subtracting, from a retention time as a time from introduction of the sample to be determined into the column, a void time as a value until a component not retained in the column is detected by a detector.

This adjusted retention time is influenced by gas chromatograph machine difference such as control accuracy of a linear speed of carrier gas, for example, column length, and experiment parameters such as a column oven temperature and a column inlet pressure; therefore, a same value is not necessarily provided for even a measurement value for the same substance in a case where measurement is made with a different gas chromatograph or different experiment condition.

Thus, a retention index which is hardly influenced by the parameters as described above and a kind and experiment condition of the gas chromatograph and which is easily compared may be used instead of the adjusted retention time.

More specifically, the retention index is a value calculated based on an adjusted retention time of a target substance and two adjusted retention times of alkane as shown in Expression 1.

[Expression 1]

$$I = \frac{\log t'(X) - \log t'(P_z)}{\log t'(P_{z+1}) - \log t'(P_z)} \times 100 + 100 \times Z \qquad (1)$$

where I is a retention index, t'(X) is the retention index of the target substance, t'($P_z$) is an adjusted retention time of alkane of a carbon number Z, t'($P_{z+1}$) is an adjusted retention time of alkane of a carbon number Z+1, and Z is a carbon number of alkane.

This retention index is not subject to the influence related to the gas chromatograph machine difference such as the column length and the linear speed of carrier gas but this value varies upon variation of temperature condition such as a column oven temperature upon performance of the gas chromatograph analysis. That is, there arises a problem that it is a parameter more easily compared than the adjusted retention time, but at least measurement temperatures needs to be equalized.

For this problem, an applicant of the present invention found a technique of calculating a retention index at an arbitrary temperature based on known retention indices measured at two different temperatures to thereby permit comparison with a retention index measured at a arbitrary temperature for an unknown sample, and applies it in Patent Document 1.

The method of calculating the retention index at the arbitrary temperature based on the known retention indices measured at the two different temperatures in Patent Literature 1 will be described briefly.

First, based on a retention index measured at a first temperature for a known registered substance, a retention index measured at a second temperature, adjusted retention times of alkaline of carbon numbers Z and Z+1 at the respective temperatures, an adjusted retention time of a registered substance at the first temperature and an adjusted retention time thereof at the second temperature are each calculated based on Expression 1.

Next, there is relation of a primary expression as shown in Expression 2 between a log of the adjusted retention time and an inverse of the temperature at which the adjusted retention time is measured; therefore, slope and a intercept are identified based on two sets of temperatures and adjusted retention times obtained based on the retention indices of the registered substance.

[Expression 2]

$$\log t' = a * \left( \frac{1}{T} \right) + b \qquad (2)$$

where t' is an adjusted retention time, T is a temperature when the adjusted retention time is measured, a is slope, and b is a intercept. Expression 2 is called an RT calculation function from this point forward.

Specifically, if a and b are identified in the RT calculation function of Expression 2, an adjusted retention time at the arbitrary temperature for a registered substance can be calculated.

Moreover, relationship between the adjusted retention time and the temperature in Expression 2 is also established for alkane as a standard substance; therefore, identifying an RT calculation function: slope and a intercept of Expression 2 for each alkaline based on alkaline adjusted retention times measured at two different temperatures permits calculation of adjusted retention time of each alkane at a arbitrary temperature.

Specifically, the adjusted retention times of a target substance and alkane as a standard substance at the arbitrary temperature can be calculated based on Expression 2; therefore, assigning these calculated adjusted retention times to Expression 1 permits calculation of a retention index of the target substance at the arbitrary temperature.

However, there may be a difference between a retention index at a desired temperature calculated for the registered substance by the method described above and a retention index actually measured at the same temperature.

Keen examination of its cause has been performed by the inventor of this application, and found out that there is a problem with accuracy in identifying an RT calculation function which is used upon retention index conversion and also which is an expression of relation for calculating an adjusted retention time of alkane at the arbitrary temperature.

For a more detailed description, consideration is given to a case where slope a and a intercept b of the RT calculation function of alkaline shown in Expression 2 by using the adjusted retention time $t'_A$ measured at the first sample temperature $T_A$ and the adjusted retention time $t'_B$ measured at the second sample temperature $T_B$ are identified.

Assigning values of the different sample temperatures and adjusted retention times into Expression 2 provides Expressions 3 and 4.

[Expression 3]

$$\log t_A' = a * \left( \frac{1}{T_A} \right) + b \qquad (3)$$

[Expression 4]

$$\log t_B' = a * \left( \frac{1}{T_B} \right) + b \qquad (4)$$

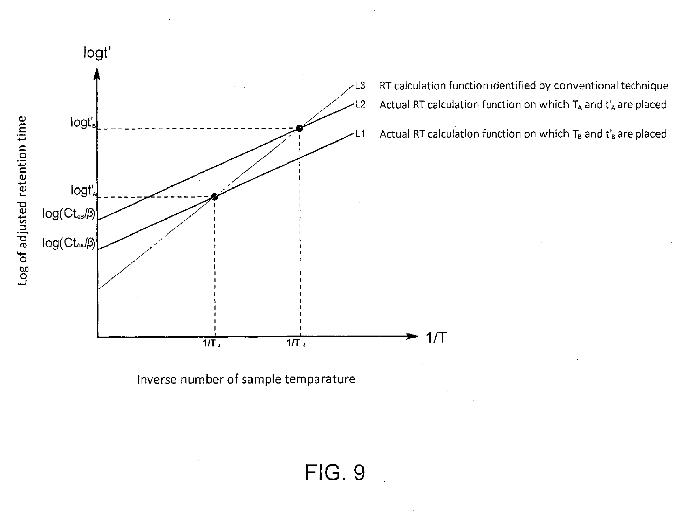

Then by solving a simultaneous equation of Expressions 3 and 4, the slope a and the intercept b are identified. In other words, as shown in FIG. 9, determined is a straight line passing through two points: $(1/T_A, \log t'_A)$ and $(1/T_B, \log t'_B)$.

Note that, strictly speaking, the intercept b in expression 2 can be theoretically expressed as shown in expression 5.

[Expression 5]

$$\log t' = a \frac{1}{T} + \log\left( \frac{C}{\beta} t_0 \right) \qquad (5)$$

Here, C is a constant number determined for each substance, β is phase ratio, and to is a void time as a retention time of a substance not retained in a column. More specifically, the void time refers to a time required for a substance, such as methane or rare gas, not retained in the column to be detected by a detector after introduced into the column. The void time is a value that also varies depending on a temperature, and therefore is not necessarily an identical value when the adjusted retention times are measured at the different sample temperatures $T_A$ and $T_B$. Thus, where the void time in condition upon the measurement of the adjusted retention time at the first sample temperature $T_A$ is $t_{0a}$ and the

void time in condition upon the measurement of the adjusted retention time at the second sample temperature $T_B$ is $t_{0b}$, an RT calculation function in different measurement condition can be described as in Expressions 6 and 7 based on Expression 5.

[Expression 6]

$$\log t'_A = a * (\frac{1}{T_A}) + \log(\frac{C}{\beta} t_{0a}) \qquad (6)$$

[Expression 7]

$$\log t_B' = a * (\frac{1}{T_B}) + \log(\frac{C}{\beta} t_{0b}) \qquad (7)$$

That is, as can be seen from expressions 6 and 7, a straight line L1 indicating the RT calculation function in the condition in which the adjusted retention time $t'_A$ is measured at the sample temperature $T_A$ and a straight line L2 indicating the RT calculation function in the condition in which the adjusted retention time $t'_B$ is measured at the sample temperature $T_B$ are different from each other as shown in FIG. 9.

Therefore, in a case where the RT calculation function are identified by a conventional method, a straight line L3 passing through two points $(1/T_A, \log t'_A)$ on the straight line L1 and $(1/T_B, \log t'_B)$ on the straight line L2 is identified, and thus both the straight lines L1 and L2 of the actual RT calculation function cannot be identified. That is, from the RT calculation function identified by the conventional method, only a combination of the temperature and the adjusted retention time on the straight line L3 is calculated, and thus it has a difference from the actual adjusted retention time.

Citation List

Patent Literature

   [Patent Literature 1] International Application No. JP2012/055475

Summary of Invention

Technical Problem

In view of the problem as described above, the present invention has been made, and it is an object of the present invention to provide a gas chromatograph data processing device capable of accurately calculating an adjusted retention time of a target substance at a arbitrary temperature and thereby more improving accuracy in calculation of a retention index at a arbitrary temperature calculated based on a known retention index, a data processing program, and a data processing method.

Solution to Problem

Specifically, one aspect of the present invention refers to a gas chromatograph data processing device, including: a sample RT storage part storing at least a first adjusted retention time measured at a first sample temperature for a target substance and a second adjusted retention time measured at a second sample temperature; and an RT calculation function identification part, based on the first sample temperature, the first adjusted retention time, the second sample temperature, and the second adjusted retention time stored in the sample RT storage part, identifying an RT calculation function as an expression of relation between the adjusted retention time and the temperature of the target substance, wherein the first adjusted retention time and the second adjusted retention time are measured in a manner such that a void time as a retention time of a substance not retained in a column becomes substantially equal between the first sample temperature and the second sample temperature. Preferably, the a gas chromatograph data processing device further comprises a column inlet pressure setting part receiving at least the second sample temperature and outputting a second column inlet pressure with which a void time as a retention time of a substance not retained in a column at the second sample temperature becomes substantially equal to a void time at the first sample temperature, wherein the second adjusted retention time stored in the sample RT storage part is measured at the second column inlet pressure outputted from the column inlet pressure setting part.

Here, the target substance refers to a standard substance such as alkane serving as a reference in gas chromatograph analysis, a registered substance previously registered in a library, or an unknown sample whose composition, etc. are not unknown. Moreover, it may be a substance other than alkaline as long as it serves as a reference as the standard substance.

With this, the adjusted retention time at the second sample temperature is measured by using the second column inlet pressure outputted by the column inlet pressure setting part, which therefore permits the void time at the first sample temperature and the void time at the second sample temperature to be substantially equal to each other.

Thus, influence of void time change of a substance not retained in the column at the first sample temperature and the second sample temperature upon the identification of the RT calculation function of a target substance based on the first sample temperature, the first adjusted retention time, the second sample temperature, and the second adjusted retention time at the RT calculation function identification part can be eliminated, thus permitting accurate identification of the RT calculation function of the target substance. More specifically, the straight line L1 of the RT calculation function passing through points: the first sample temperature and the first adjusted retention time and the straight line L2 of the RT calculation function passing through points: the second sample temperature and the second adjusted retention time are different from each other, but since the void times at measurement of the different adjusted retention times become substantially equal to each other and thus the straight line L1 and the straight line L2 become substantially identical to each other. Therefore, even in a case where slope and a intercept of the RT calculation function are identified by the first sample temperature, the first adjusted retention time, the second sample temperature, and the second adjusted retention time, each point is placed on one straight line of the RT calculation function to be identified, which therefore permits highly accurate identification of the slope and the intercept of the RT calculation function.

Therefore, since the adjusted retention time of a target substance at a arbitrary temperature can be calculated by using the RT calculation function identified with high accuracy, a difference from an adjusted retention time actually measured in the same condition can be made very small. Thus, using this RT calculation function of the target substance upon calculation of a retention index at a arbitrary temperature based on a known retention index can also improve accuracy of the calculated retention index.

To permits free selection between the first sample temperature and the second sample temperature in order to provide appropriate separation accuracy of each substance in gas chromatograph analysis and bring void times at the first sample temperature and the second sample temperature to be identical to each other at a predetermined value, the column inlet pressure setting part further may receive the first sample temperature, and based on a temperature-pressure characteristic expression as an expression of relation indicating a combination of a column oven temperature and a column inlet pressure with which the void time becomes a predetermined value, may output a first column inlet pressure and the second column inlet pressure respectively corresponding to the first sample temperature and the second sample temperature, and the first adjusted retention time stored in the sample RT storage part may be measured at the first column inlet pressure outputted from the column inlet pressure setting part. Moreover, this is a mode specially suitable for a case where the RT calculation function of a standard substance is previously identified and an RT calculation function identified in subsequent measurement is continuously used.

Finding at least two combinations of a column oven temperature and a column inlet pressure at which the void time becomes a predetermined value permits identification of the temperature-pressure characteristic expression with high accuracy, and to permit setting of a column inlet pressure suitable for a arbitrary sample temperature, the temperature-pressure characteristic expression may be a primary expression of the column oven temperature and the column inlet pressure.

For example, listed as a mode suitable for introducing into a column a standard substance as a reference together with an unknown sample for retention index measurement and identifying an RT calculation function of the standard substance based on an adjusted retention time measured at that time is the one in which the column inlet pressure setting part further receives a set void time as a void time measured at the first sample temperature, and based on a pressure-void time characteristic expression as an expression of relation between the column inlet pressure and the void time at the second sample temperature, outputs a second column inlet pressure corresponding to the set void time. With this, it is only required to identify relationship between the pressure at the second sample temperature and the void time, which permits a simple method.

Listed as a detailed configuration example for bringing void times at the first sample temperature and the second sample temperature to be identical to each other to thereby improve accuracy in identification of an RT calculation function of a target substance is the one in which the RT calculation function identification part, based on the first sample temperature, the first adjusted retention time, the second sample temperature, and the second adjusted retention time, identifies slope and a intercept of the RT calculation function described as a primary expression in which a log of the adjusted retention time is an inverse number of the temperature.

To calculate, with high accuracy, an unknown retention index in different temperature condition from a known retention index for a registered substance, further included may be: an adjusted RT calculation part calculating an adjusted retention time of a standard substance as a target substance at a arbitrary input temperature based on the RT calculation function identified at the RT calculation function identification part and based on the received arbitrary input temperature; and a known RI data conversion part calculating a retention index of a registered substance in predetermined temperature condition based on a plurality of retention indices measured at a plurality of mutually different temperatures for the registered substance and based on the RT calculation function of the standard substance.

To create a database in which a known retention index is converted into a retention index in predetermined temperature condition, permit comparison with a retention index of an unknown sample measured in the same temperature condition, and determination of the unknown sample only by gas chromatograph analysis, the known RI conversion part, based on a known retention index of a registered substance previously registered as the target substance and based on the RT calculation function of the standard substance, may calculate the retention index of the registered substance in the predetermined temperature condition, and further provided may be: a known RI data storage part storing known RI data indicating a retention index for each of the plurality of mutually different temperatures in association with an identifier specific to each of a plurality of registered substances; a post-conversion RI data storage part storing post-conversion RI data in which at least part of the retention indices of the registered substance subjected to the conversion by the known RI data conversion part is associated with its corresponding specific identifier; a reception part receiving the predetermined temperature condition and a value related to a retention index actually measured through gas chromatograph analysis using the predetermined temperature condition for the unknown sample; and a search part extracting, from among the post-conversion RI data stored in the post-conversion RI data storage part, the retention index identical to or substantially equal to a value of the retention index of the unknown sample in the predetermined temperature condition received at the reception part, and outputting the identifier corresponding to the extracted retention index.

Listed as a detail example of the predetermined temperature condition upon retention index measurement, the predetermined temperature condition may include an isothermal analysis temperature appropriately set upon isothermal analysis performed in the gas chromatograph analysis, and the known RI data conversion part, based on the retention indices of the registered substance at two different temperatures: first temperature and second temperature and based on adjusted retention times of a standard substance at the first temperature, the second temperature, and the isothermal analysis temperature calculated based on the RT calculation function, may make conversion into retention indices of the registered substance at the isothermal analysis temperature..

To improve accuracy in identification of an RT calculation function of a standard substance in a known gas chromatograph data processing device and thus improve retention index calculation, by using a gas chromatograph data processing program and including: a sample RT storage part storing at least a first adjusted retention time measured at a first sample temperature for a target substance and a second adjusted retention time measured at a second sample temperature; an RT calculation function identification part, based on the first sample temperature, the first adjusted retention time, the second sample temperature, and the second adjusted retention time stored in the sample RT storage part, identifying an RT calculation function as an expression of relation between the adjusted retention time of the target substance and the temperature; and a column inlet pressure setting part receiving at least the second sample temperature, and outputting a second column inlet pressure such that a void time as a retention time of a non-retained substance as a substance not retained in a column at the second sample temperature becomes substantially equal to a void time at the first sample temperature, wherein the second adjusted retention time stored in the sample RT storage part is measured at a second column inlet pressure outputted from the column inlet pressure setting part, this program may be installed into the known gas chromatograph data processing device. Listed as examples of the recording medium are a CD-R, a DVD-R, a flash memory, etc.

Moreover, used as a data processing method capable of providing the effects of the present invention may be a gas chromatograph data processing method, including: storing at least a first adjusted retention time measured at a first sample temperature for a target substance and a second adjusted retention time measured at a second sample temperature; identifying an RT calculation function as an expression of relation between the adjusted retention time and the temperature of a target substance based on the first sample temperature, the first adjusted retention time, the second sample temperature, and the second adjusted retention time; and receiving at least the second sample temperature, and outputting a second column inlet pressure such that a void time as a retention time of a non-retained substance as a substance not retained in a column at the second sample temperature becomes substantially equal to a void time at the first sample temperature, wherein the second adjusted retention time is measured at the second column inlet pressure

To permit accurate calculation of an adjusted retention time in different temperature and measurement condition based on at least two adjusted retention times measured at mutually different temperatures for a arbitrary substance, a gas chromatograph data processing device may include: a sample RT storage part storing at least a first adjusted retention time measured at a first sample temperature for a target substance and a second adjusted retention time measured at a second sample temperature; and an RT calculation function identification part, based on the first sample temperature, the first adjusted retention time, the second sample temperature, and the second adjusted retention time stored in the sample RT storage part, identifying an RT calculation function as an expression of relation between the adjusted retention time and the temperature of the target substance, wherein the first adjusted retention time and the second adjusted retention time are measured in a manner such that a void time as a retention time of a substance not retained in a column becomes substantially equal between the first sample temperature and the second sample temperature. The invention further relates to the following items:

Item 1: A gas chromatograph data processing device, comprising:

a sample RT storage part storing at least a first adjusted retention time measured at a first sample temperature and a second adjusted retention time measured at a second sample temperature for the target substance;
an RT calculation function identification part identifying an RT calculation function as an expression of relation between the adjusted retention time and the temperature of the target substance based on the first sample temperature, the first adjusted retention time, the second sample temperature, and the second adjusted retention time stored in the sample RT storage part; and
a column inlet pressure setting part receiving at least the second sample temperature and outputting a second column inlet pressure with which a void time as a retention time of a substance not retained in a column at the second sample temperature becomes substantially equal to a void time at the first sample temperature, wherein the second adjusted retention time stored in the sample RT storage part is measured at the second column inlet pressure outputted from the column inlet pressure setting part.

Item 2: The gas chromatograph data processing device according to Item 1, wherein the column inlet pressure setting part further receives the first sample temperature, and based on a temperature-pressure characteristic expression as an expression of relation indicating a combination of a column oven temperature and a column inlet pressure with which the void time becomes a predetermined value, outputs a first column inlet pressure and the second column inlet pressure respectively corresponding to the first sample temperature and the second sample temperature, and
the first adjusted retention time stored in the sample RT storage part is measured at the first column inlet pressure outputted from the column inlet pressure setting part.
Item 3: The gas chromatograph data processing device according to Item 2, wherein the temperature-pressure characteristic expression is a primary expression of the column oven temperature and the column inlet pressure. Item 4: The gas chromatograph data processing device according to Item 1, wherein the column inlet pressure setting part further receives a set void time as the void time measured at the first sample temperature, and based on a pressure-void time characteristic expression as an expression of relation between the column inlet pressure and the void time at the second sample temperature, outputs the second column inlet pressure corresponding to the set void time.
Item 5: The gas chromatograph data processing device according to Item 1, wherein the RT calculation function identification part, based on the first sample temperature, the first adjusted retention time, the second sample temperature, and the second adjusted retention time, identifies slope and a intercept of the RT calculation function that a log of the adjusted retention time is described as a primary expression of an inverse of the temperature.
Item 6: The gas chromatograph data processing device according to Item 1, further comprising:

an adjusted RT calculation part calculating an adjusted retention time of a standard substance as a target substance at a arbitrary input temperature based on the RT calculation function identified at the RT calculation function identification part and based on the received arbitrary input temperature; and
a known RI data conversion part calculating a retention index of a registered substance in predetermined temperature condition based on a plurality of retention indices measured at a plurality of mutually different temperatures for the registered substance and the RT calculation function of the standard substance.

Item 7: The gas chromatograph data processing device according to Item 6, wherein the known RI conversion part, based on a known retention index of a registered substance previously registered as the target substance and the RT calculation function of the standard substance, calculates the retention index of the registered substance in the predetermined temperature condition, and further provided are:

a known RI data storage part storing known RI data indicating a retention index for each of the plurality of mutually different temperatures in association with an identifier specific to each of a plurality of registered substances;

a post-conversion RI data storage part storing post-conversion RI data in which at least part of the retention indices of the registered substance converted by the known RI data conversion part is associated with its corresponding specific identifier;

a reception part receiving the predetermined temperature condition and a value related to a retention index actually measured through gas chromatograph analysis using the predetermined temperature condition for the unknown sample; and

a search part extracting, from among the post-conversion RI data stored in the post-conversion RI data storage part, the retention index identical to or substantially equal to a value of the retention index of the unknown sample in the predetermined temperature condition received at the reception part, and outputting the identifier corresponding to the extracted retention index. Item 8: The gas chromatograph data processing device according to Item 7, wherein

the predetermined temperature condition includes an isothermal analysis temperature appropriately set upon isothermal analysis performed in the gas chromatograph analysis, and

the known RI data conversion part, based on the retention indices of the registered substance at two different temperatures, that is, first temperature and second temperature and based on adjusted retention times of a standard substance at the first temperature, the second temperature, and the isothermal analysis temperature calculated based on the RT calculation function, makes conversion into a retention index of the registered substance at the isothermal analysis temperature.

Item 9: A gas chromatograph data processing program product comprising:

a sample RT storage part storing at least a first adjusted retention time measured at a first sample temperature and a second adjusted retention time measured at a second sample temperature for a target substance;

an RT calculation function identification part, based on the first sample temperature, the first adjusted retention time, the second sample temperature, and the second adjusted retention time stored in the sample RT storage part, identifying an RT calculation function as an expression of relation between the adjusted retention time of the target substance and the temperature; and

a column inlet pressure setting part receiving at least the second sample temperature, and outputting a second column inlet pressure such that a void time as a retention time of a non-retained substance as a substance not retained in a column at the second sample temperature becomes substantially equal to a void time at the first sample temperature, wherein

the second adjusted retention time stored in the sample RT storage part is measured at a second column inlet pressure outputted from the column inlet pressure setting part.

Advantageous Effects of Invention

With the gas chromatograph data processing device, a data processing program, and the data processing method according to the present invention as described above, void times at the respective sample temperatures used upon the identification of the RT calculation function of a target substance are brought to be substantially identical to each other, which can therefore more improve accuracy in identification of the RT calculation function than in a conventional case.

Brief Description of Drawings

FIG. 1 is a schematic diagram showing an entire analysis system according to a first embodiment of the present invention;

FIG. 2 is a functional block diagram showing a gas chromatograph data processing device of the first embodiment;

FIG. 3 is a schematic graph showing concepts of a retention time and an adjusted retention time;

FIG. 4 is a schematic graph showing an outline of a pressure-temperature characteristic expression;

FIG. 5 is a schematic graph showing that the pressure-temperature characteristic expression is identified from a pressure-void time characteristic expression;

FIG. 6 is a schematic diagram showing an outline of data stored in a known RI data storage part;

FIG. 7 is a schematic diagram showing an outline of data stored in a post-conversion RI data storage part;

FIG. 8 is a flow chart showing operation of the gas chromatograph data processing device of the first embodiment; and

FIG. 9 is a schematic graph illustrating a problem in conventional RI calculation function identification.

Reference Signs List

| | |
|---|---|
| 100 | Gas chromatograph data processing device |
| 22 | Standard substance RT calculation part |
| 23 | Column inlet pressure setting part |
| 24 | RT sample part |
| 25 | Sample RT storage part |
| 26 | RT calculation function identification part |
| 4 | Reception part |
| 6 | Known RI data storage part |
| 7 | Known RI data conversion part |
| 71 | Known temperature RT conversion part |
| 72 | Isothermal analysis temperature RT calculation part |
| 73 | RI calculation part |
| 8 | Post-conversion RI data storage part |
| 9 | Search part |

Description of Embodiments

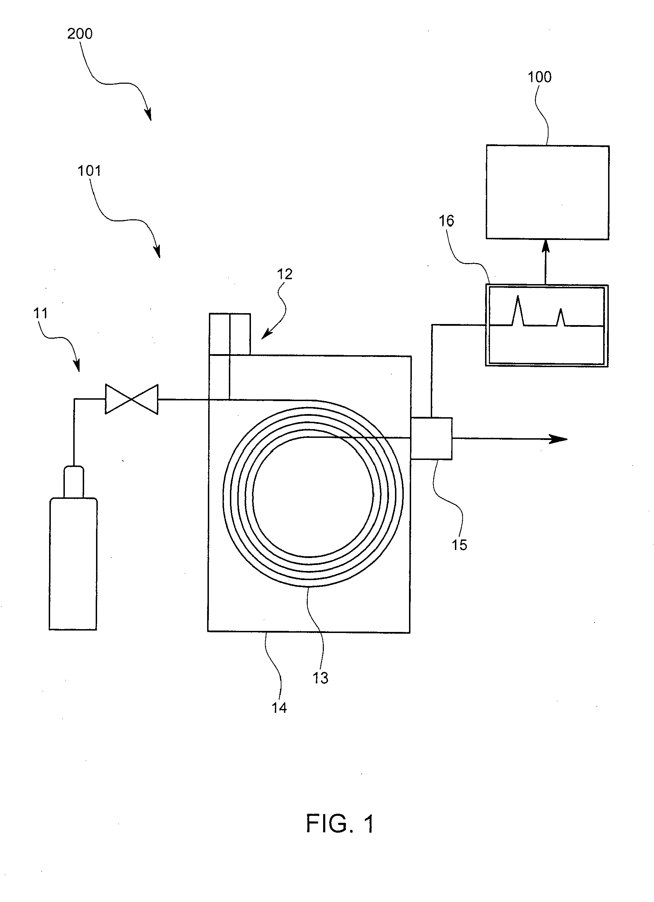

The first embodiment of the present invention will be described with reference to the drawings. A gas chromatograph data processing device 100 of the first embodiment is used for identifying, only based on a retention index of an unknown sample X obtained by gas chromatograph analysis, as what substance $G_n$ this unknown sample X is registered. That is, as shown in FIG. 1, this gas chromatograph data processing device 100 forms an analysis system 200 in combination with a gas chromatograph 101.

The gas chromatograph 101 includes: a column 13 as a tube having a stationary phase applied therein; a carrier gas introduction part 11 for introducing into the column 13 carrier vase used as a mobile phase; a sample introduction part 12 for introducing, into the column 13, a sample, such as an unknown sample X, to be determined; a column oven 14 for keeping a temperature of the column 13 constant or increasing the temperature at a constant speed; a detection part 15 detecting a substance passing on an outlet side of the column 13 and outputting an electric signal; and a retention time measurement part 16 measuring, based on the electric signal outputted from the detection part 15, a retention time that is a time from introduction of each sample to arrival at the outlet of the column 13.

The gas chromatograph data processing device 100, in this embodiment, based on a retention time or an adjusted retention time of an unknown sample X outputted from the retention time measurement part 16, identifies to which registered substance $G_n$ already registered in a library this unknown sample X corresponds, and then outputs it.

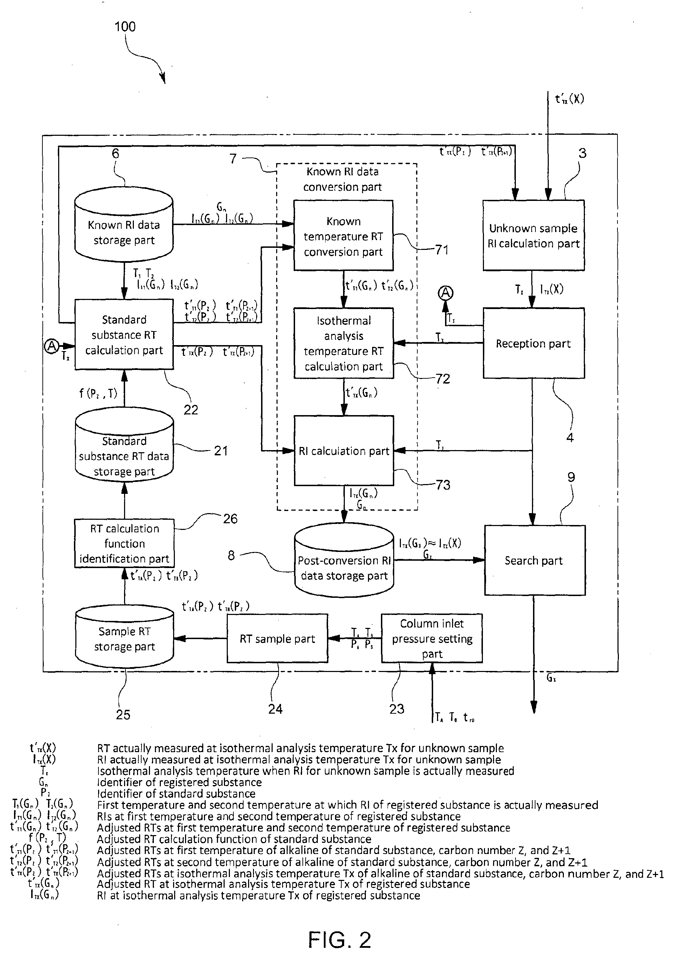

The gas chromatograph data processing device 100 is a so-called computer including a memory, a CPU, an A/D converter, an input and output interface, a monitor, etc., and is configured such that the CPU executes a gas chromatograph data processing program stored in the memory to thereby exert each function and output, based on a retention index of the inputted unknown sample X, to which of the registered substances G the unknown sample X corresponds. Specifically, this gas chromatograph data processing device 100, as shown in FIG. 2, is configured to exert functions of at least a column inlet pressure setting part 23, an RT sample part 24, a sample RT storage part 25, an RT calculation function identification part 26, a standard substance RT data storage part 21, a standard substance RT calculation part 22, an unknown sample RI calculation part 3, a reception part 4, a known RI data storage part 6, a known RI data conversion part 7, a post-conversion RI data storage part 8, and a search part 9.

The different parts will be described in order. In the description below, gas chromatograph analysis according to the first embodiment is performed by isothermal analysis, and an isothermal analysis temperature $T_X$ as a temperature at time of measurement of the adjusted retention time of the unknown sample X will be used for the description.

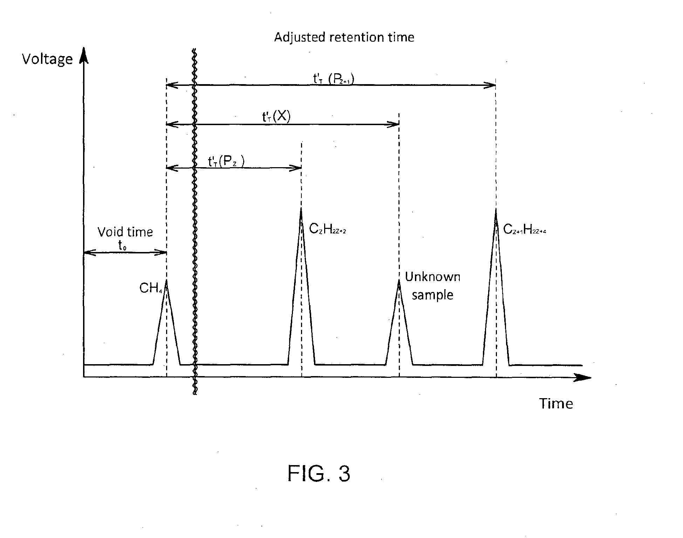

Note that the adjusted retention time is a value obtained by subtracting a void time, which is a retention time of a non-retained substance such as $CH_4$ not retained in the column 13, from a retention time measured by the gas chromatograph 101 as shown in FIG. 3.

First, a description will be arbitrary concerning identification of an RT calculation function for calculating an adjusted retention time of a standard substance P at a arbitrary temperature used upon measurement of a retention index of an unknown sample or upon calculation of a retention index at the isothermal analysis temperature $T_X$ based on a known retention index of a registered substance $G_n$. The identification of the RT calculation function of this standard substance is performed as appropriate upon, for example, first retention index measurement or replacement of the column 13 so as to correspond to, for example, a machine difference of the gas chromatograph 101. Portions related to this identification of the RT calculation function of the standard substance P are the column inlet pressure setting part 23, the RT sample part 24, the sample RT storage part 25, and the RT calculation function identification part 26.

The column inlet pressure setting part 23, upon measurement of an adjusted retention time at each sample temperature required for the identification of the RT calculation function of the standard substance P, determines what column inlet pressure is to be set. More specifically, the column inlet pressure setting part 23 receives a first sample temperature $T_A$ and a second sample temperature $T_B$ as temperatures at which the user wants to measure the adjusted retention time of the standard substance P, and a set void time $t_{r0}$ as a value to be set as a void time that is a retention time of methane or the like not retained at the column 13. Then this column inlet pressure setting part 23 is configured to output a first column inlet pressure $P_A$ corresponding to the first sample temperature $T_A$ and a second column inlet pressure $P_B$ corresponding to the second sample temperature $T_B$ so as to provide the received set void time $t_{r0}$.

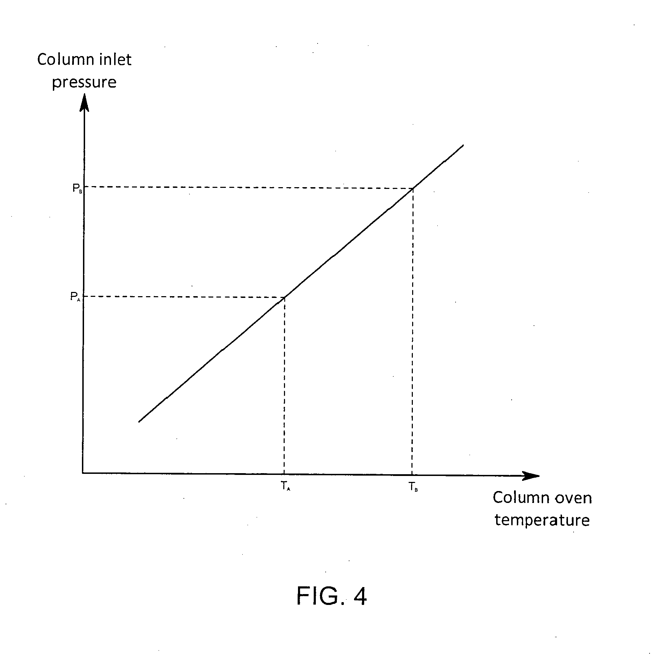

Each of the column inlet pressures $P_A$ and $P_B$ are outputted as a result of reference by the column inlet pressure setting part 23 to a temperature-pressure characteristic expression as an expression of relation indicating a combination of a column oven temperature and a column inlet pressure at which a void time previously created by experiment as shown in FIG. 4 becomes a predetermined value. This temperature-pressure characteristic expression is close to a primary expression of the column oven temperature and the column inlet pressure in a case where a combination such that the void time becomes constant at a predetermined value is plotted on a graph as shown in FIG. 4.

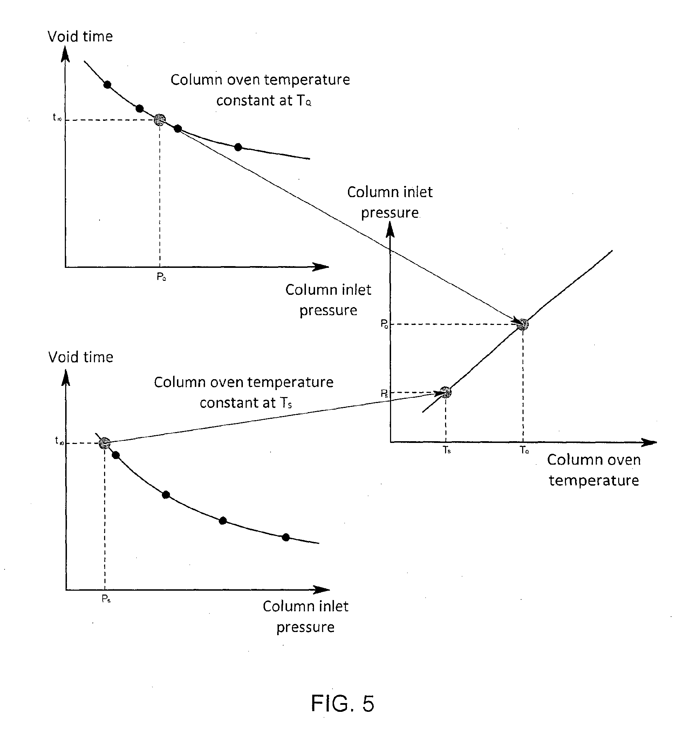

A method of creating this temperature-pressure characteristic expression will be described in detail. First, as shown in two left graphs in FIG. 5, with the column oven temperature fixed, a void time is measured at a plurality of points while the column inlet pressure is changed. Then based on values at the respective points, an expression of relation between the column inlet pressure and the void time is identified through, for example, a minimum square method and is defined as the pressure-void time characteristic expression. Then, for example, a pressure-void time characteristic expression where the column oven temperature is $T_Q$, and a pressure-void time characteristic expression where the column oven temperature is $T_S$ are each created, and column inlet pressures $P_Q$ and $P_S$ with which a desired set void time $t_{r0}$ is provided at the column oven temperatures $T_Q$ and $T_S$ is obtained from the respective pressure-void time characteristic expressions. Then a primary expression passing through two points of the column inlet pressures $P_Q$ and $P_S$ corresponding to the respective column oven temperatures $T_Q$ and $T_S$ as shown in a right graph in FIG. 5 is identified, and the temperature-pressure characteristic expression is creased for each void time.

The RT sample part 24 receives, from the column inlet pressure setting part, column inlet pressures $P_A$ and $P_B$ with which the void time becomes a set void time $tr_0$ at each of the sample temperatures $T_A$ and $T_B$, and measures adjusted retention time of the standard substance P under these conditions. Then the RT sample part 24 stores into the sample RT storage part 25: a pair of the first sample temperature $T_A$ and a first adjusted retention time measured at the first column inlet pressure $P_A$, and a pair of the second sample temperature $T_B$ and a second adjusted retention time measured at the second column inlet pressure $P_B$.

The RT calculation function identification part 26, based on the first sample temperature $T_A$, the first adjusted retention time $t'_{TA}(P_Z)$, the second sample temperature $T_B$, and the second adjusted retention time $t'_{TB}(P_Z)$ stored in the sample RT storage part 25, identifies an RT calculation function as an expression of relation between the adjusted retention time and the temperature of the standard substance P. Here, the RT calculation function, as shown in the Expression 8, is expressed as a primary function of a log of the adjusted retention time and an inverse number of temperature.

[Expression 8]

$$\log t'_T (P_z) = a(P_z) * (1/T) + b(P_z) \qquad (8)$$

where $t_T$, $(P_Z)$ is an adjusted retention time of alkane of a carbon number Z at a temperature T, T is an absolute temperature, and $a(P_Z)$ and $b(P_Z)$ are constant numbers specific to the respective carbon numbers of alkane.

Moreover, the first sample temperature $T_A$ and the first column inlet pressure $P_A$ upon measurement of the first adjusted retention time $t'T_A(P_Z)$ used upon identification of slope and a intercept in Expression 8 and the second sample temperature $T_B$ and the second column inlet pressure $P_B$ upon measurement of the second adjusted retention time $t'T_B$ $(P_Z)$ are set such that the void times become equal to each other, which can therefore eliminate influence of the void time upon identification of the slope. That is, provided is a state in which straight lines L1 and L2 passing through respective points in FIG. 9 are overlapped, and thus the two points are placed on the straight lines of the RT calculation function. Therefore, the straight line L3 in FIG. 9 agrees with the straight line of the RT calculation function, which can therefore improve accuracy in identifying slope and a intercept of the RT calculation function.

This RT calculation function identification part 26 identifies respective RT calculation function for alkane of a required carbon number Z and each RT calculation function is stored into the standard substance RT data storage part 21. That is, respective constant numbers are previously and experimentally obtained for all the alkane used in this embodiment. In a case where a constant number for the arbitrary alkaline is unknown, each constant number can be calculated based on the alkane with the different carbon number.

The standard substance RT calculation part 22 calculates an adjusted retention time of a standard substance P at a necessary temperature based on the identified RT calculation function. In this embodiment, a temperature upon actual measurement of a retention index for a registered substance $G_n$ to be described later or a temperature upon measurement of a retention index of an unknown sample X is inputted, and a value required for calculation of each part are outputted. Here, at the RT calculation function identification part 26, each adjusted retention time used upon the identification of the RT calculation function of the standard substance is a value measured in a state set such that the void times become equal to each other; therefore, the same void time is also reflected on the adjusted retention time of the standard substance P calculated by assigning the temperature to the identified RT calculation function. In other words, the adjusted retention time calculated by assigning the temperature to the RT calculation function is a value on which measurement condition used for the RT calculation function identification is directly reflected.

The unknown sample RI calculation part 3, based on the adjusted retention time of the unknown sample X measured by the gas chromatograph 101 and based on the adjusted retention time of the standard substance P calculated by assigning the temperature at which the adjusted retention time of the unknown sample X is measured to the RT calculation function of the standard substance, calculates a retention index of the unknown sample X actually measured. More specifically, the unknown sample RI calculation part 3 inputs into the standard substance RT calculation part 22 the isothermal analysis temperature $T_X$ at which the adjusted retention time of the unknown sample X is measured, and acquires an adjusted retention time of the standard substance P at this temperature. Then based on definition of the retention index of Expression 9, the retention index of the unknown sample X actually measured is calculated, and this value is inputted into the reception part 4.

[Expression 9]

$$I_{TX}(X) = \frac{\log t'_{TX}(X) - \log t'_{TX}(P_z)}{\log t'_{TX}(P_{z+1}) - \log t'_{TX}(P_z)} \times 100 + 100 \times Z \qquad (9)$$

Here, $I_{TX}(X)$ is a retention index at the isothermal analysis temperature Tx of the unknown sample X, $t'_{TX}(X)$ is an adjusted retention time at the isothermal analysis temperature $T_X$ of the unknown sample X, $t'T_X(P_z)$ is an adjusted retention time of alkaline of a carbon number Z at the isothermal analysis temperature $T_X$, $t'_{TX}(P_{z+1})$ is an adjusted retention time at the isothermal analysis temperature $T_X$ of alkaline of a carbon number Z+1, and Z is a carbon number of alkane.

The reception part 4 receives: predetermined temperature condition when the retention index for the unknown sample X is actually measured; and a value related to the retention index actually measured by gas chromatograph analysis using the predetermined temperature condition for the unknown sample X. In this embodiment, the predetermined temperature condition is the isothermal analysis temperature $T_X$ when isothermal analysis is performed for the unknown sample X at the gas chromatograph 101, and for the retention index of the unknown sample X, a value calculated at the unknown sample RI calculation part 3 is received. For the retention index, for example, an adjusted retention time as a related value may be received. Moreover, although not clearly shown in FIG. 2, the reception part 4 also receives a kind of a stationary phase used when the unknown sample X is subjected to the gas chromatograph analysis, and the search part 9 to be described below performs determination of the unknown sample X by using data of the registered substance $G_n$ measured by use of the same stationary phase.

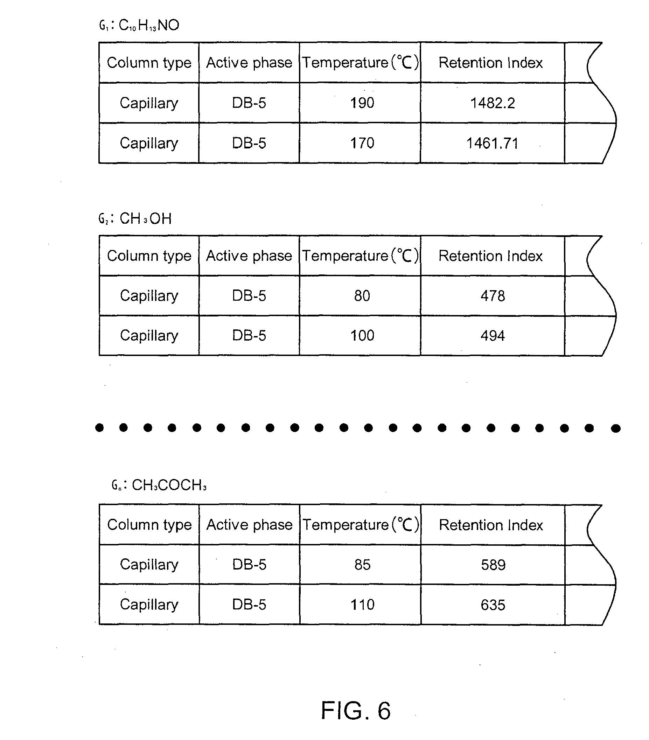

The known RI data storage part 6 is a library packing a large number of retention indices for each chemical substance collected by, for example, NIST, and stores a plurality of pieces of known RI data each including a pair of an identifier specific to each registered substance $G_n$ and the retention index actually measured by gas chromatograph analysis at a plurality of different temperatures for the registered substance $G_n$ indicating the identifier. In other words, the known RI data storage part 6 stores, together with a chemical expression and a name of the registered substance $G_n$ as an identifier as shown in FIG. 6, each retention index in pair with the measured temperature. Note that in this known RI data storage part 6, only the retention index at one measured temperature may be stored for one registered substance $G_n$, but such a registered substance $G_n$ is not used for retention index conversion.

The known RI data conversion part 7 is so configured as to convert the retention index included in the known RI data stored in the known RI data storage part 6 into the retention index at the isothermal analysis temperature $T_X$ received by the reception part 4. More specifically, the known RI data conversion part 7 is composed of: a known temperature RT conversion part 71 calculating an adjusted retention time at a known temperature measured from the retention index of the registered substance $G_n$ stored in the known RI data storage part 6; an isothermal analysis temperature RT calculation part 72 calculating an adjusted retention time at time of the isothermal analysis based on the adjusted retention time at the known temperature calculated at the known temperature RT conversion part 71; and an RI calculation part 73 calculating the retention index at the isothermal analysis temperature $T_X$ based on the adjusted retention time at the time of isothermal analysis.

The known temperature RT conversion part 71, from the known RI data storage part 6, for the registered substance $G_n$ indicating one identifier, acquires the retention indices at the two different temperatures: first temperature $T_1$ and second temperature $T_2$, and also acquires from the standard substance RT calculation part 22: two adjusted retention times of the standard substance P at the first temperature $T_1$ and two adjusted retention times of the standard substances P at the second temperature $T_2$. Here, it is configured such that the adjusted retention times of the standard substance P at the first temperature $T_1$ and the second temperature $T_2$ are calculated by the standard substance RT calculation part 22 by assigning the first temperature $T_1$ and the second temperature $T_2$ to the RT calculation function identified for the alkane of the respective carbon numbers Z at the RT calculation function identification part 26. Then the known temperature RT conversion part 71 is so configured as to calculate, by Expressions 10 and 11 based on the acquired values, an adjusted retention time of the registered substance $G_n$ at the isothermal analysis temperature $T_X$. Note that the first temperature $T_1$ and the second temperature $T_2$ may be different values for the different registered substances $G_n$.

[Expression 10]

$$\log t'_{T1}(G_n) = \log t'_{T1}(P_z) + (I_{T1}(G_n) - 100 \times Z)(\log t'_{T1}(P_{z+1}) - \log t'_{T1}(P_z))/100 \qquad (10)$$

[Expression 11]

$$\log t'_{T2}(G_n) = \log t'_{T2}(P_z) + (I_{T2}(G_n) - 100 \times Z)(\log t'_{T2}(P_{z+1}) - \log t'_{T2}(P_z))/100 \qquad (11)$$

Here, $I_{T1}(G_n)$ and $I_{T2}(G_n)$ are retention indices of the registered substance $G_n$ at the known temperatures $T_1$ and $T_2$, $t'_{T1}(G_n)$ and $t'_{T2}(G_n)$ are the adjusted retention times of the registered substance $G_n$ at the known temperatures $T_1$ and $T_2$, $t'_{T1}(P_Z)$ and $t'_{T2}(P_Z)$ are adjusted retention times of alkane of the carbon number Z at the known temperatures $T_1$ and $T_2$, $t'_{T1}(P_{Z+1})$ and $t'_{T2}(P_{Z+1})$ are the adjusted retention times of alkane of a carbon number Z+1 at the known temperatures $T_1$ and $T_2$, and Z is a carbon number. Expressing the carbon number Z by use of a gauss symbol [ ], it is an integer number selected by $Z=[I_{T1}(G_n)]$ in an upper expression of Expressions 10 and 11 described above, and it is an integer number selected by $Z=[I_{T2}(G_n)]$ in a lower expression.

From these Expressions 10 and 11, the adjusted retention time of the registered substance $G_n$ at the known temperature is calculated. Here, for the adjusted retention times of the registered substance $G_n$ at the known temperatures T1 and T2 and $t'_{T1}(G_n)$ and $t'_{T2}(G_n)$, experiment condition such as a column inlet pressure (linear speed) other than a temperature corresponds to a value measured at a linear speed when the adjusted retention times of the alkaline at the known temperatures $T_1$ and $T_2$ are measured.

The isothermal analysis temperature RT calculation part 72 is so configured as to, based on linear relationship between inverse numbers of the first temperature $T_1$ and the second temperature $T_2$ and logs of their corresponding adjusted retention times of the registered substance $G_n$, calculate the adjusted retention time of the registered substance $G_n$ at the isothermal analysis temperature $T_X$. That is, the isothermal analysis temperature RT calculation part 72, by Expression 12, calculates the adjusted retention time of the registered substance $G_n$ at the isothermal analysis temperature Tx.

[Expression 12]

$$\log t'_{TX}(G_n) = \frac{\log t'_{T2}(G_n) - \log t'_{T1}(G_n)}{1/T_2 - 1/T_1}\left(\frac{1}{T_x}\right) + \frac{(1/T_2)\log t'_{T1}(G_n) - 1/T_1 \log t'_{T2}(G_n)}{1/T_2 - 1/T_1} \qquad (12)$$

Here, $T_X$ is an isothermal analysis temperature, and $t'_{TX}(G_n)$ is an adjusted retention time of the registered

substance $G_n$ at the isothermal analysis temperature $T_X$. As described above, the experiment condition such as the column inlet pressures (linear speeds) of $1'_{T1}(G_n)$ and $t'_{T2}(G_n)$ corresponds to those when the adjusted retention time of alkaline is measured, and this $t'_{TX}(G_n)$ has also been similarly converted into that when the adjusted retention time of alkane is measured. More strictly, the void time when the adjusted retention time of alkane measured at initial setting is directly reflected. Therefore, for the adjusted retention time measured for the unknown sample X, the experiment condition such as the column inlet pressures (linear speeds) may differ, and thus this value cannot be directly used for comparison.

The RI calculation part 73, based on the adjusted retention time of the registered substance $G_n$ at the isothermal analysis temperature $T_X$ calculated at the isothermal analysis temperature RT calculation part 72 and the adjusted retention time of the standard substance P at the isothermal analysis temperature $T_X$ calculated at the standard substance RT calculation part 22, calculates a retention index of the registered substance $G_n$ at the isothermal analysis temperature $T_X$ by Expression 13, and outputs to the post-conversion RI data storage part 8 this value in pair with the identifier.

[Expression 13]

$$I_{TX}(G_n) = \frac{\log t'_{TX}(G_n) - \log t'_{TX}(P_z)}{\log t'_{TX}(P_{z+1}) - \log t'_{TX}(P_z)} \times 100 + 100 \times Z \qquad (13)$$

Here, $IT_X(G_n)$ is a retention index of the registered substance $G_n$ at the isothermal analysis temperature $T_X$, and Z is a carbon number, for which a carbon number satisfying an expression of relation: $t'T_X(P_Z) < t'T_X(G_n) < t'T_X(P_{Z+1})$ is selected.

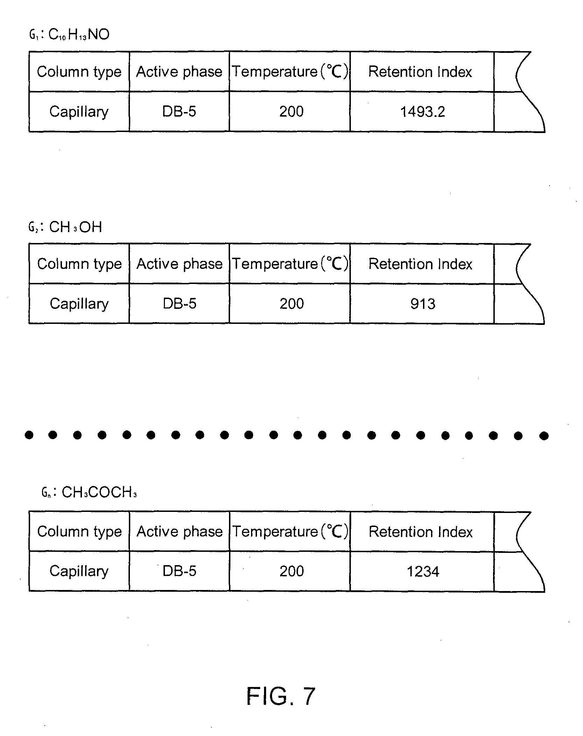

The post-conversion RI data storage part 8 stores the retention index of the registered substance $G_n$ at predetermined temperature condition subjected to conversion by the known RI data conversion part 7 as shown in FIG. 7 and post-conversion RI data in pair with the corresponding identifier. This post-conversion RI data storage part 8, unlike the known RI data storage part 6, stores only one retention index at the isothermal analysis temperature $T_X$ for one registered substance $G_n$.

The search part 9, from among the post-conversion RI data stored in the post-conversion RI data storage part 8, extracts the one including the retention index of the unknown sample X that is identical or substantially equal to the value of the retention index of the unknown sample X in the predetermined temperature condition received at the reception part 4, and outputs the identifier corresponding to the extracted retention index.

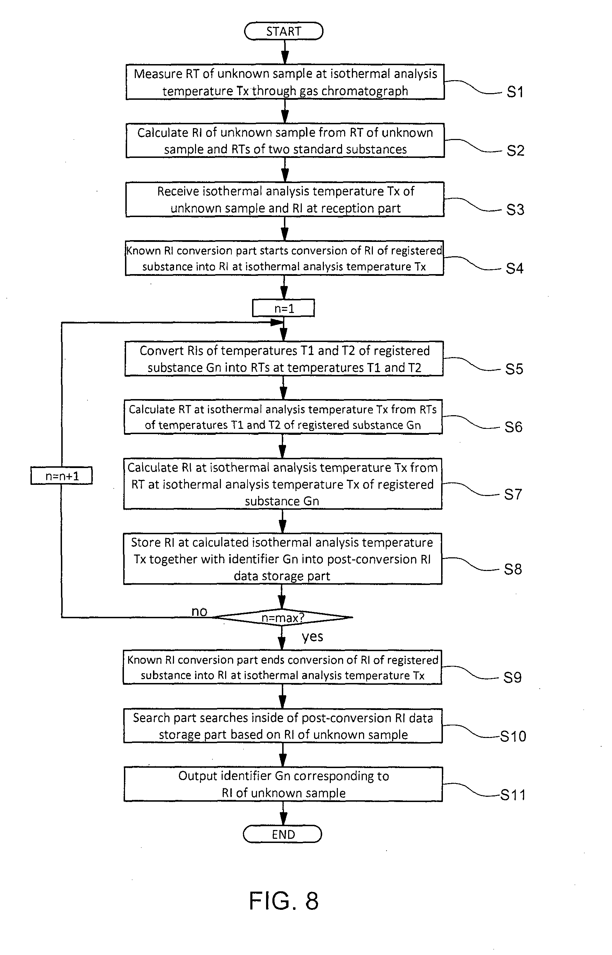

Operation other than initial setting of the gas chromatograph data processing device 100 configured in this manner will be described based on a flowchart of FIG. 8.

First, the adjusted retention time of the unknown sample X at the isothermal analysis temperature $T_X$ measured by the gas chromatograph 101 is measured (step S1). The unknown sample RI calculation part 3 calculates the retention index of the unknown sample X based on the measured adjusted retention time of the unknown sample X and the adjusted retention time of the standard substance P calculated by assigning the isothermal analysis temperature $T_X$ into the RT calculation function identified at initial setting at the standard substance RT calculation part 22 (step S2).

Then at the reception part 4, the isothermal analysis temperature $T_X$ used for the measurement and the calculated retention index of the unknown sample X are received (step S3). This consequently starts conversion from the known retention index of the registered substance $G_n$ into a retention index at the isothermal analysis temperature $T_X$ by the known RI data conversion part 7 (step S4).

First, for the registered substance $G_n$ whose identifier stored in the known RI data storage part 6 is G1, the known temperature RT conversion part 71 performs conversion from the adjusted retention time of the standard substance P and retention indices measured in the past at the first temperature $T_1$ and the second temperature $T_2$ into the adjusted retention times of the registered substance $G_n$ at the first temperature $T_1$ and the second temperature $T_2$ (step S5).

Next, at the isothermal analysis temperature RT calculation part 72, for the adjusted retention times of the registered substance $G_n$ at the first temperature $T_1$ and the second temperature $T_2$, the adjusted retention time of the registered substance $G_n$ at the isothermal analysis temperature $T_X$ is calculated by calculation using linearity (step S6).

Finally, at the RI calculation part 73, based on the adjusted retention time of the registered substance $G_n$ at the isothermal analysis temperature $T_X$ and the adjusted retention time of the standard substance P, calculates a retention index of the registered substance $G_n$ at the isothermal analysis temperature $T_X$ (step S7), and stores the already converted retention index together with the identifier $G_1$ into the post-conversion RI data storage part 8 (step S8). These operation steps S5 to S8 of converting the retention index are performed until n becomes a maximum value, performs conversion into a retention index at the isothermal analysis temperature $T_X$ for all the registered substances stored in the known RI data storage part 6 whereby a new search aggregate is created (step S9).

Then the search part 9 searches inside of the post-conversion RI data storage part 8 for the retention index of the unknown sample X (step S10), and outputs the identifier $G_n$ stored together with a value close to or identical to the post-conversion retention index (step S11).

As described above, only by the gas chromatograph 101, it is possible to identify what is the unknown sample X. That is, in this embodiment, if there are retention indices at a plurality of different temperatures found out by the inventor of this application, it is possible to identify the unknown sample X only by gas chromatograph analysis by using that they can be converted into retention indices at predetermined temperature condition other than temperature condition at which these retention indices are actually measured.

Further, the column inlet pressure is in this embodiment set so that upon identification of an RT calculation function used upon calculation of the adjusted retention time of alkane at each temperature for retention index conversion, the void time is equal even with the different sample temperatures, which therefore permits identification of the RT calculation function with high accuracy.

Therefore, the known retention index is converted into a desired retention index by using the adjusted retention time of alkaline calculated from the highly accurate RT calculation function, which can therefore reduce an error for the retention index actually measured under the same condition also for the calculated retention index. This makes it possible to preferably determine the unknown sample X.

The second embodiment will be described.

Configuration in the first embodiment is such that the column inlet pressure setting part 23, by previously creating through experiment a temperature-pressure characteristic expression indicating a combination of a temperature and a pressure with which the void time as shown in FIG. 4 becomes a constant value, can output column inlet pressures $P_A$ and $P_B$ corresponding to the respective sample temperatures $T_A$ and $T_B$, but in the second embodiment, only pressure-void time characteristic expression as shown in a left graph in FIG. 5 is created.

Specifically, in the second embodiment, the second sample temperature $T_B$ is a previously fixed temperature, and a void time at each column inlet pressure is measured to create the pressure-void time characteristic expression at the second sample temperature $T_B$. Then the column inlet pressure setting part 23 receives the void time measured at the first sample temperature $T_A$ and a arbitrary column inlet pressure, searches for the column inlet pressure $P_B$ satisfying the void time in the pressure-void time characteristic expression of the second sample temperature $T_B$, and outputs it.

Even with this, the void times at the respective temperatures $T_A$ and $T_B$ can be made identical to each other, which therefore makes it possible to identify the RT calculation function of the standard substance P with high accuracy as in the first embodiment.

Other embodiments will be described.

In the embodiment described above, the retention index of the registered substance as a target substance is converted, but the retention index with the target substance as an unknown sample may be converted. For example, the retention indices with the different temperatures for the unknown sample may be measured and conversion into the retention index with the temperature most frequently registered in a database may be performed.

The predetermined temperature condition is not limited to the isothermal analysis temperature, but may be, for example, an initial temperature or a temperature increase rate under temperature increase analysis condition. That is, it is also possible to perform conversion from the two retention indices measured at the two different isothermal analysis temperatures into retention indices in predetermined temperature increase analysis condition.

For example, the RI conversion part may be any part as long as it calculates a retention index of a registered substance in temperature increase analysis condition by calculating am adjusted retention time of alkane in temperature increase analysis condition and an adjusted retention time of a registered substance in temperature increase analysis condition from known values.

A more detailed method of calculating a retention time of alkane in temperature increase analysis condition will be described. Where a retention time of alkane at a arbitrary temperature is $t_T(P_Z)$ and a column length is L, $L/t_T(P_Z)$ provides a speed at which alkaline at the arbitrary temperature travels in the column. As a result of integrating $L/t_T(P_Z)$ with a retention time $t_{TU}(P_Z)$ as a time required from welding start in gas chromatograph in temperature increase condition $T_U$ to arrival at a column outlet, it becomes equal to the length L of the column 13, and thus Expression 14 below is provided.

[Expression 14]

$$L = \int_0^{t_{TU}(P_z)} \frac{L}{t_0(1 + \exp(\frac{a(P_z)}{T} + b(P_z)))} dt \qquad (14)$$

Here, Expression 14 can be calculated by performing numerical calculation in a manner such as to, while changing an upper limit of an integration zone, search for a retention time $t_{TU}(P_Z)$ such that a left side and a right side become substantially equal to each other. Here, a(P$_Z$) and b(P$_Z$) of integrated functions are slope a and a intercept b of an RT calculation function of alkane of the carbon number Z of Expression 8 in the first embodiment. Therefore, it is possible to, by identifying this constant number based on a retention time sampled in condition with void times equalized as in the first embodiment, bring the integrated function to be substantially equal to an actual function. Then the accuracy can also be similarly improved for a retention time after conversion of alkane in temperature increase analysis condition.

Moreover, a retention time of a registered substance in temperature increase analysis condition can be calculated by Expression 15 through a similar method.

[Expression 15]

$$L = \int_0^{t'_{TU}(Gn)} \frac{L}{t_0(1 + \exp(\frac{a(G_n)}{r \times t + T_i} + b(G_n)))} dt \qquad (15)$$

where t$_{TU}$(G$_n$) is a retention time as a time required from welding start in gas chromatograph in temperature increase condition T$_U$ to arrival at the column outlet. Moreover, a(G$_n$) and b(G$_n$) are slope a and a intercept b of the RT calculation function of the registered substance G$_n$.

Further, a retention index in the temperature increase analysis condition can be calculated by Expression 16 based on these calculated retention times of the registered substance and the standard substance in the temperature increase analysis condition.

[Expression 16]

$$I_{TU}(G_n) = \frac{t'_{TU}(G_n) - t'_{TU}(P_z)}{t'_{TU}(P_{z+1}) - t'_{TU}(P_z)} \times 100 + 100 \times Z \qquad (16)$$

As described above, to calculate the retention time in the temperature increase analysis condition, adjusted retention times of a standard substance or a registered substance at all temperatures at time of temperature change during integration calculation as described above is required. More specifically, in a case where a retention time in the temperature increase analysis condition T$_U$ through numerical calculation for Expressions 14 and 15 is calculated, integration zones from 0 to t$_{TU}$ are divided into a larger number of zones based on micropart time to calculate a value on an individual zone basis. That is, the numerical integration is performed by multiplying the micropart time to the adjusted retention time of the standard substance or the registered substance at the temperature corresponding to the respective zone, which therefore requires an RT calculation function for calculating the adjusted retention time at each zone. Therefore, use of the RT calculation function identified by the technique of the present invention can improve accuracy of the calculation at each zone, which permits conversion into a retention index at time of temperature increase analysis with even higher accuracy.

In addition, to actually measure the adjusted retention time in the temperature increase analysis condition with high accuracy, it is required to make the measurement without constantly changing the linear speed and the void time even upon temperature change. At time of such actual measurement in the temperature increase analysis condition while the column oven temperature is increased with passage of time, by referring to the temperature-pressure characteristic expression shown in the first embodiment and FIG. 4, a change to a column inlet pressure corresponding to the column oven temperature at each time may be made. That is, the column oven temperature and the column inlet pressure can be changed on a straight line of the temperature-pressure characteristic expression as shown in FIG. 4 to always keep the linear speed and the void time constant, permitting accurate adjusted retention time measurement.

Further, the present invention has been applied for the adjusted retention time calculation used in a process for calculating an unknown retention index from a known retention index in each of the embodiments described above, but the present invention may also be applied only for identifying the RT calculation function showing relationship between the adjusted retention time and the temperature.

Specifically, only a sample RT storage part and an RT calculation function identification part may be formed, measurement may be made while condition is set such that void times are made equal to each other between at least two adjusted retention times measured at different temperatures, and the RT calculation function identification part may identify an RT calculation function by using these adjusted retention times. Moreover, if a temperature and a pressure are set such that void times become the same value in different measurement condition, an RT calculation function may be identified based on data of three or more sets of temperatures and adjusted retention times. In this case, with an increase in the number of sampling points, effect such as measurement error of adjusted retention time may be more reduced, permitting the identification with even higher accuracy.

Moreover, configuration in each of the embodiments described above is such that for a change in a column oven temperature, a column inlet pressure required for keeping a void time constant is calculated and an attempt to make a change to this pressure is made, but if the void time can be kept constant, a parameter to be changed in accordance with a temperature change may be a parameter other than the pressure. Note that in the embodiments described above, the present invention is applied as a gas chromatograph data processing device, but the present invention is also applicable as a liquid chromatograph data processing device.

In addition, various modifications and combinations of the embodiments may be made without departing from the spirits of the present invention.

**Claims**

1.   A gas chromatograph data processing device, comprising:

a sample RT storage part storing at least a first adjusted retention time measured at a first sample temperature for a target substance and a second adjusted retention time measured at a second sample temperature; and
an RT calculation function identification part, based on the first sample temperature, the first adjusted retention time, the second sample temperature, and the second adjusted retention time stored in the sample RT storage part, identifying an RT calculation function as an expression of relation between the adjusted retention time and the temperature of the target substance, wherein
the first adjusted retention time and the second adjusted retention time are measured in a manner such that a void time as a retention time of a substance not retained in a column becomes substantially equal between the first sample temperature and the second sample temperature.

2.   A gas chromatograph data processing device according to claim 1, further comprising:

a column inlet pressure setting part receiving at least the second sample temperature and outputting a second column inlet pressure with which a void time as a retention time of a substance not retained in a column at the second sample temperature becomes substantially equal to a void time at the first sample temperature, wherein
the second adjusted retention time stored in the sample RT storage part is measured at the second column inlet pressure outputted from the column inlet pressure setting part.

3.   The gas chromatograph data processing device according to claim 2,
wherein
the column inlet pressure setting part further receives the first sample temperature, and based on a temperature-pressure characteristic expression as an expression of relation indicating a combination of a column oven temperature and a column inlet pressure with which the void time becomes a predetermined value, outputs a first column inlet pressure and the second column inlet pressure respectively corresponding to the first sample temperature and the second sample temperature, and
the first adjusted retention time stored in the sample RT storage part is measured at the first column inlet pressure outputted from the column inlet pressure setting part.

4.   The gas chromatograph data processing device according to claim 3,
wherein
the temperature-pressure characteristic expression is a primary expression of the column oven temperature and the column inlet pressure.

5.   The gas chromatograph data processing device according to claim 2,
wherein
the column inlet pressure setting part further receives a set void time as the void time measured at the first sample temperature, and based on a pressure-void time characteristic expression as an expression of relation between the column inlet pressure and the void time at the second sample temperature, outputs the second column inlet pressure corresponding to the set void time.

6.   The gas chromatograph data processing device according to any one of claims 1 to 5, wherein

the RT calculation function identification part, based on the first sample temperature, the first adjusted retention time, the second sample temperature, and the second adjusted retention time, identifies slope and a intercept of the RT calculation function that a log of the adjusted retention time is described as a primary expression of an inverse of the temperature.

7.  The gas chromatograph data processing device according to any one of claims 1 to 6, further comprising:

    an adjusted RT calculation part calculating an adjusted retention time of a standard substance as a target substance at a arbitrary input temperature based on the RT calculation function identified at the RT calculation function identification part and based on the received arbitrary input temperature; and
    a known RI data conversion part calculating a retention index of a registered substance in predetermined temperature condition based on a plurality of retention indices measured at a plurality of mutually different temperatures for the registered substance and the RT calculation function of the standard substance.

8.  The gas chromatograph data processing device according to claim 7,
    wherein
    the known RI conversion part, based on a known retention index of a registered substance previously registered as the target substance and the RT calculation function of the standard substance, calculates the retention index of the registered substance in the predetermined temperature condition, and
    further provided are:

    a known RI data storage part storing known RI data indicating a retention index for each of the plurality of mutually different temperatures in association with an identifier specific to each of a plurality of registered substances;
    a post-conversion RI data storage part storing post-conversion RI data in which at least part of the retention indices of the registered substance converted by the known RI data conversion part is associated with its corresponding specific identifier;
    a reception part receiving the predetermined temperature condition and a value related to a retention index actually measured through gas chromatograph analysis using the predetermined temperature condition for the unknown sample;
    and
    a search part extracting, from among the post-conversion RI data stored in the post-conversion RI data storage part, the retention index identical to or substantially equal to a value of the retention index of the unknown sample in the predetermined temperature condition received at the reception part, and outputting the identifier corresponding to the extracted retention index.

9.  The gas chromatograph data processing device according to claim 8,
    wherein
    the predetermined temperature condition includes an isothermal analysis temperature appropriately set upon isothermal analysis performed in the gas chromatograph analysis, and
    the known RI data conversion part, based on the retention indices of the registered substance at two different temperatures, that is, first temperature and second temperature and based on adjusted retention times of a standard substance at the first temperature, the second temperature, and the isothermal analysis temperature calculated based on the RT calculation function, makes conversion into a retention index of the registered substance at the isothermal analysis temperature.

10. A gas chromatograph data processing program product comprising:

    a sample RT storage part storing at least a first adjusted retention time measured at a first sample temperature and a second adjusted retention time measured at a second sample temperature for a target substance;
    an RT calculation function identification part, based on the first sample temperature, the first adjusted retention time, the second sample temperature, and the second adjusted retention time stored in the sample RT storage part, identifying an RT calculation function as an expression of relation between the adjusted retention time of the target substance and the temperature; and
    a column inlet pressure setting part receiving at least the second sample temperature, and outputting a second column inlet pressure such that a void time as a retention time of a non-retained substance as a substance not retained in a column at the second sample temperature becomes substantially equal to a void time at the first sample temperature, wherein

the second adjusted retention time stored in the sample RT storage part is measured at a second column inlet pressure outputted from the column inlet pressure setting part.

11. A gas chromatograph data processing method, comprising:

storing at least a first adjusted retention time measured at a first sample temperature for a target substance and a second adjusted retention time measured at a second sample temperature;
identifying an RT calculation function as an expression of relation between the adjusted retention time and the temperature of a target substance based on the first sample temperature, the first adjusted retention time, the second sample temperature, and the second adjusted retention time; and
receiving at least the second sample temperature, and outputting a second column inlet pressure such that a void time as a retention time of a non-retained substance as a substance not retained in a column at the second sample temperature becomes substantially equal to a void time at the first sample temperature, wherein
the second adjusted retention time stored is measured at the second column inlet pressure.

FIG. 1

FIG. 2

| | |
|---|---|
| $t'_{Tx}(X)$ | RT actually measured at isothermal analysis temperature Tx for unknown sample |
| $I_{Tx}(X)$ | RI actually measured at isothermal analysis temperature Tx for unknown sample |
| $T_x$ | Isothermal analysis temperature when RI for unknown sample is actually measured |
| $G_n$ | Identifier of registered substance |
| $P_i$ | Identifier of standard substance |
| $T_1(G_n)$  $T_2(G_n)$ | First temperature and second temperature at which RI of registered substance is actually measured |
| $I_{T1}(G_n)$  $I_{T2}(G_n)$ | RIs at first temperature and second temperature of registered substance |
| $t'_{T1}(G_n)$  $t'_{T2}(G_n)$ | Adjusted RTs at first temperature and second temperature of registered substance |
| $f(P_i, T)$ | Adjusted RT calculation function of standard substance |
| $t'_{T1}(P_i)$  $t'_{T1}(P_{i+1})$ | Adjusted RTs at first temperature of alkaline of standard substance, carbon number Z, and Z+1 |
| $t'_{T2}(P_i)$  $t'_{T2}(P_{i+1})$ | Adjusted RTs at second temperature of alkaline of standard substance, carbon number Z, and Z+1 |
| $t'_{Tx}(P_i)$  $t'_{Tx}(P_{i+1})$ | Adjusted RTs at isothermal analysis temperature Tx of alkaline of standard substance, carbon number Z, and Z+1 |
| $t'_{Tx}(G_n)$ | Adjusted RT at isothermal analysis temperature Tx of registered substance |
| $I_{Tx}(G_n)$ | RI at isothermal analysis temperature Tx of registered substance |

FIG. 3

FIG. 4

FIG. 5

$G_1$: $C_{10}H_{13}NO$

| Column type | Active phase | Temperature (°C) | Retention Index | |
|---|---|---|---|---|
| Capillary | DB-5 | 190 | 1482.2 | |
| Capillary | DB-5 | 170 | 1461.71 | |

$G_2$: $CH_3OH$

| Column type | Active phase | Temperature (°C) | Retention Index | |
|---|---|---|---|---|
| Capillary | DB-5 | 80 | 478 | |
| Capillary | DB-5 | 100 | 494 | |

● ● ● ● ● ● ● ● ● ● ● ● ● ● ● ● ● ● ● ●

$G_n$: $CH_3COCH_3$

| Column type | Active phase | Temperature (°C) | Retention Index | |
|---|---|---|---|---|
| Capillary | DB-5 | 85 | 589 | |
| Capillary | DB-5 | 110 | 635 | |

# FIG. 6

$G_1$: $C_{10}H_{13}NO$

| Column type | Active phase | Temperature (°C) | Retention Index | |
|---|---|---|---|---|
| Capillary | DB-5 | 200 | 1493.2 | |

$G_2$: $CH_3OH$

| Column type | Active phase | Temperature (°C) | Retention Index | |
|---|---|---|---|---|
| Capillary | DB-5 | 200 | 913 | |

● ● ● ● ● ● ● ● ● ● ● ● ● ● ● ● ● ● ● ●

$G_n$: $CH_3COCH_3$

| Column type | Active phase | Temperature (°C) | Retention Index | |
|---|---|---|---|---|
| Capillary | DB-5 | 200 | 1234 | |

# FIG. 7

START

Measure RT of unknown sample at isothermal analysis temperature Tx through gas chromatograph — S1

Calculate RI of unknown sample from RT of unknown sample and RTs of two standard substances — S2

Receive isothermal analysis temperature Tx of unknown sample and RI at reception part — S3

Known RI conversion part starts conversion of RI of registered substance into RI at isothermal analysis temperature Tx — S4

n=1

Convert RIs of temperatures T1 and T2 of registered substance Gn into RTs at temperatures T1 and T2 — S5

Calculate RT at isothermal analysis temperature Tx from RTs of temperatures T1 and T2 of registered substance Gn — S6

n=n+1

Calculate RI at isothermal analysis temperature Tx from RT at isothermal analysis temperature Tx of registered substance Gn — S7

Store RI at calculated isothermal analysis temperature Tx together with identifier Gn into post-conversion RI data storage part — S8

no ◇ n=max?

yes

Known RI conversion part ends conversion of RI of registered substance into RI at isothermal analysis temperature Tx — S9

Search part searches inside of post-conversion RI data storage part based on RI of unknown sample — S10

Output identifier Gn corresponding to RI of unknown sample — S11

END

FIG. 8

FIG. 9

**EP 2 703 811 A1**

Europäisches
Patentamt

European
Patent Office

Office européen
des brevets

## EUROPEAN SEARCH REPORT

Application Number

EP 13 00 4289

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 153 438 A (BLUMBERG LEONID M [US] ET AL) 28 November 2000 (2000-11-28) * the whole document * | 1-11 | INV. G01N30/86 |
| X | US 5 987 959 A (KLEE MATTHEW S [US] ET AL) 23 November 1999 (1999-11-23) * abstract * | 1,10,11 | ADD. G01N30/32 |
| A | BLUMBERG L M ET AL: "Method Translation and Retention Time Locking in Partition GC", ANALYTICAL CHEMISTRY, AMERICAN CHEMICAL SOCIETY, US, vol. 70, no. 18, 15 September 1998 (1998-09-15), pages 3828-3839, XP002276489, ISSN: 0003-2700, DOI: 10.1021/AC971141V * the whole document * | 1,10,11 | |
| A | US 5 827 946 A (KLEE MATTHEW S [US] ET AL) 27 October 1998 (1998-10-27) * abstract * * figures 1,2 * | 1,10,11 | TECHNICAL FIELDS SEARCHED (IPC) G01N |
| A | US 6 634 211 B1 (BLUMBERG LEONID M [US]) 21 October 2003 (2003-10-21) * the whole document * | 1,10,11 | |
| A,P | PAUL G. BOSWELL ET AL: "Easy and accurate calculation of programmed temperature gas chromatographic retention times by back-calculation of temperature and hold-up time profiles", JOURNAL OF CHROMATOGRAPHY A, vol. 1263, 23 September 2012 (2012-09-23), pages 179-188, XP055087514, ISSN: 0021-9673, DOI: 10.1016/j.chroma.2012.09.048 * abstract * | 1,10,11 | |

The present search report has been drawn up for all claims

| Place of search | Date of completion of the search | Examiner |
|---|---|---|
| Munich | 12 November 2013 | Dedman, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 00 4289

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2013

| Patent document cited in search report | | Publication date | Patent family member(s) | Publication date |
|---|---|---|---|---|
| US 6153438 | A | 28-11-2000 | NONE | |
| US 5987959 | A | 23-11-1999 | NONE | |
| US 5827946 | A | 27-10-1998 | NONE | |
| US 6634211 | B1 | 21-10-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012055475 A